# EUROPEAN PATENT SPECIFICATION

(11) **EP 1 405 763 B1**
(45) Date of publication and mention of the grant of the patent: **24.10.2007**
(21) Application number: 03077903.7
(22) Date of filing: 15.09.2003
(51) Int. Cl.: B60R 9/06

(54) **Freight rack**
Lasttransportgestell
Dispositif de transport de charge

(30) Priority: 01.10.2002 NL 1021567
(43) Date of publication of application: 07.04.2004
(73) Proprietor: Geurtsen, Gerhardus Joseph Alouisius, 7391 AK Twello (NL)
(72) Inventor: Geurtsen, Gerhardus Joseph Alouisius, 7391 AK Twello (NL)

(56) References cited:
- EP-A- 0 037 599
- EP-A- 0 666 197
- EP-A- 1 134 123
- GB-A- 2 352 216
- NL-A- 8 402 794
- US-A- 4 775 282
- US-A- 5 431 522

## Description

The invention relates to a freight rack, arranged for mounting on top of a towing hook of a motor vehicle, comprising an immovable part provided with mounting means that can be mounted to the towing hook, a platform for carrying the freight, two guiding rods, mounted to the platform and slidable connected to the immovable part, a wire shaft, connected to the platform and mounted parallel to the guiding rods and drive means, mounted to the immovable part, arranged for cooperating with the wire shaft, for adjusting a height of the platform.

A freight rack of this type is known from US-A-4 775 282. In the known freight rack, the drive means consist of an electric driven jackscrew, which is used to adjust the height of the platform. The description does not disclose any type of protection of the freight rack. This means that one could drive off while the platform is still in the lowest position, which would inevitably cause problems.

The freight rack according to the invention substantially obviates this problem and is characterised in that the drive means are provided with an electric motor, with an electric circuit connected to the electric motor and with protection means, arranged for automatically steering the platform upwards as soon as an ignition lock of the motor vehicle is switched on.

A favourable embodiment of the inventive freight rack is characterised in that the protection means are also arranged for automatically switching off the electric motor as soon as an electric current towards the electric motor exceeds a previously determined current. In this way, one can on the one hand prevent too heavy loads from being transported and on the other hand one can easily detect that the platform has reached a highest or a lowest position. Especially the detection of the lowest position, which may be determined partly by the terrain and by the height of the towing hook, becomes possible in this way.

A further favourable embodiment is characterised in that the protection means are arranged for switching off the electric motor as soon as the motor vehicle starts moving. This measure more in particular aims at preventing the platform from being steered downwards while driving by whatever a cause.

The invention will now be further explained with a reference to the following figures, in which:
- Fig. 1: schematically shows a possible embodiment of a freight rack according to the invention in side view;
- Fig. 2: schematically shows this embodiment in front view;
- Fig. 3: schematically shows in more detail the drive means of this embodiment in back view;
- Fig. 4: shows in a block diagram a possible embodiment of an electric drive with protection means.

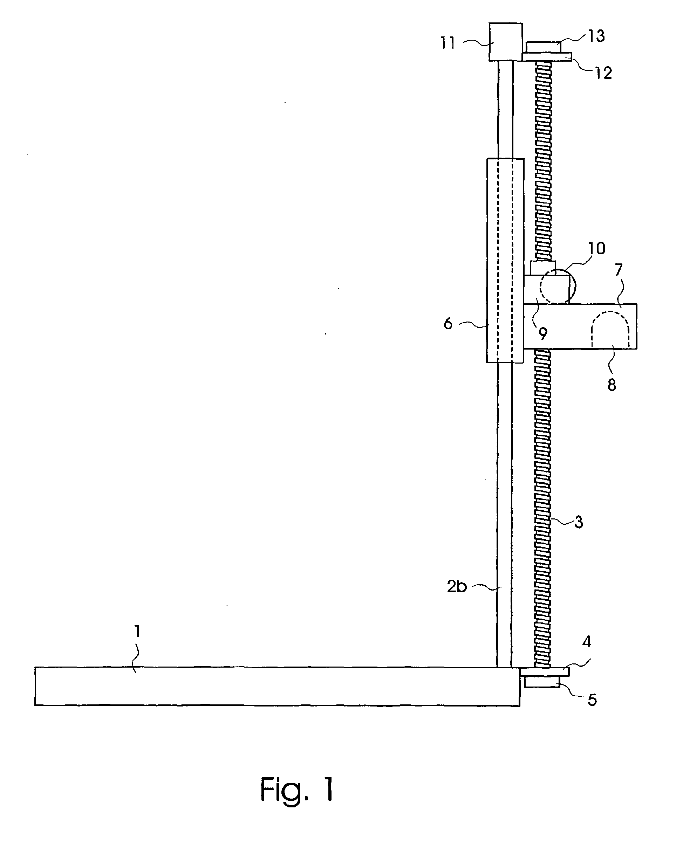

Fig. 1 schematically shows a possible embodiment of a freight rack according to the invention in side view, consisting of a platform 1, onto which two guiding rods 2a,2b are mounted of which only guiding rod 2b is visible in the figure, and a wire shaft 3 which is connected to platform 1 with the aid of a projection 4 and a nut 5. The freight rack moreover consists of a guiding plate 6 which forms a guide for guiding rods 2a,2b and a fastening block 7 which is rigidly connected to guiding plate 6 and which is provided with a cup-shaped recess 8 which can be placed on top of a spherical end of a towing hook of a motor vehicle and can be fixed with means well known in the art, not shown here. Fastening block 7 is moreover provided with a housing 9 in which a worm is accommodated which in turn may drive a nut, arranged for cooperating with the wire shaft. In the embodiment shown here, the worm is coupled to an electric motor 10 with which platform 1 can be moved with respect to fastening block 7 in an obvious manner. The top side of the freight rack is provided with a cross bar 11 in order to make it sufficiently rigid. The guiding rods 2a,2b are mounted to cross bar 11 and wire shaft 3 is also mounted to it with the aid of a projection 12 and a nut 13. Obviously, electric motor 10 can be replaced by a possibly removable wrench or a crank if desired, in which case platform 1 can be moved manually.

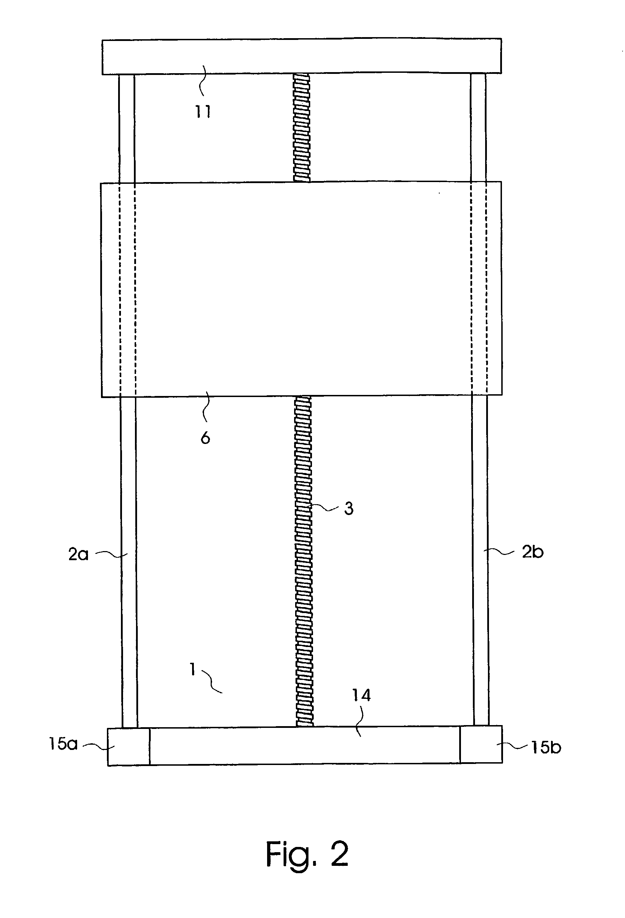

Fig. 2 schematically shows this embodiment in front view, with platform 1 which consists in this embodiment of a cross bar 14 onto which two guiding rods 2a,2b are mounted and two beams 15a,15b, which are connected perpendicular to cross bar 14 and onto which a pallet or other means of attachment can be mounted. Moreover, guiding plate 6 is visible which forms a guide for guiding rods 2a,2b and cross bar 11, onto which the guiding rods 2a,2b are mounted and onto which also wire shaft 3 is mounted.

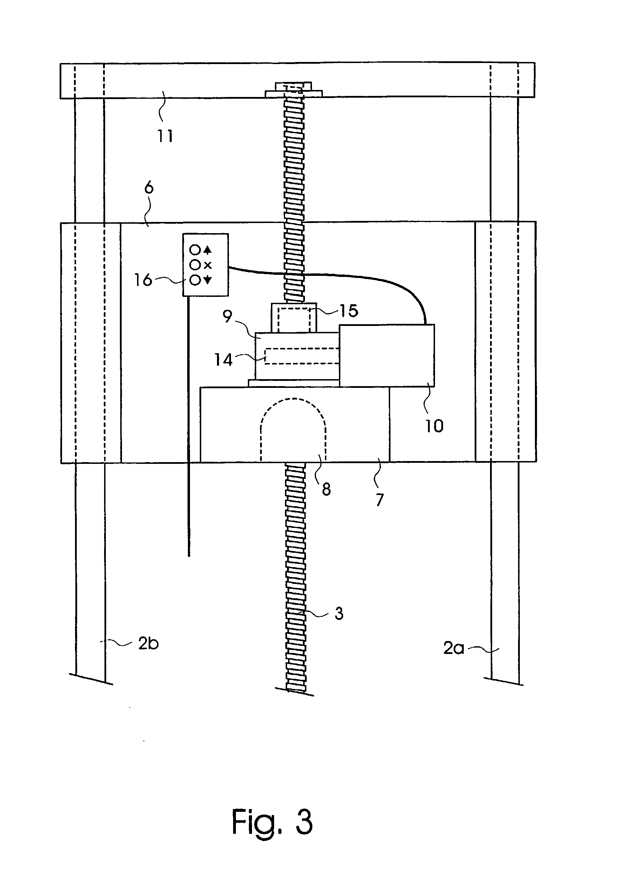

Fig. 3 schematically shows in more detail the drive means of this embodiment in back view, consisting of a housing 9, mounted on top of fastening block 7, inside of which a worm 14 is housed which can drive a nut, arranged for cooperating with a wire shaft 15. Worm 14 is coupled to electric motor 10, which can be operated by a small control cabinet 16. Control cabinet 16 may be connected with a plug to the electric system of a motor car, possibly together with a illumination means, in a way well known in the art, after which electric motor 10 can be operated with the aid of the control means shown in the figure and with a controller, housed inside control cabinet 16. The controller will amongst other things control if the load to be lifted is not too heavy and it will switch off electric motor 10 if the platform reaches a highest or a lowest possible position.

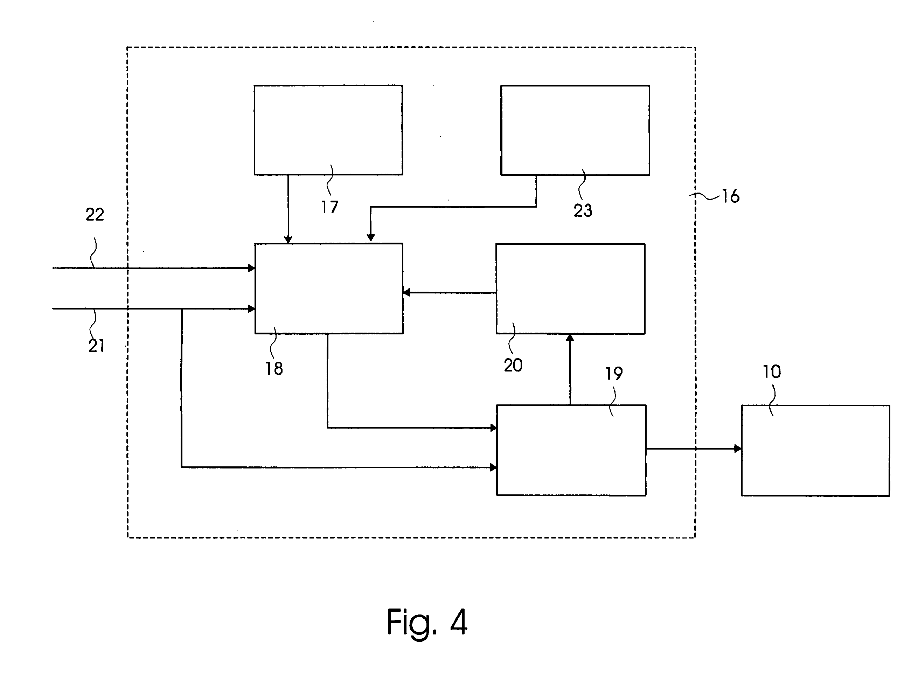

Fig.4 shows in a block diagram a possible embodiment of an electric drive with protection means, consisting of control means 17, connected to a controller 18 and a motor steering 19 which is adapted to steer motor 10. Controller 18 may consist of a suitably programmed integrated circuit or it may consist of a few discrete components, as is well known in the art. To controller 18 a measuring device 20 is connected, as such well known in the art, with the aid of which a current, supplied by motor steering 19 to electric motor 10 can be measured. This current is a direct measure for the force acting onto platform 1, thanks to the linear behaviour of the wire shaft transmission. In this way, controller 18 can easily detect that too heavy a load is to be lifted or that the platform has reached a highest possible or a lowers possible position and switch off motor steering 19.

Control cabinet 16 receives a supply voltage 21 for the motor steering from the electric system of the motor vehicle it is coupled to. Preferably, also a switched supply voltage 22 is supplied to control cabinet 16, which switched supply voltage becomes available when the ignition lock of the motor vehicle is switched on. With the aid of memory means, present in controller 18, controller 18 may check then if platform 1 is in a lowest position. If that is the case, controller 18 may autonomously steer platform 1 upwards.

Control cabinet 16 may moreover comprise a movement sensor 23, as such well known in the art, which is coupled to controller 18 and which may prevent in an obvious manner that motor steering 19 is switched on while the motor car is moving.

## Claims

1. Freight rack, arranged for mounting on top of a towing hook of a motor vehicle, comprising an immovable part (7) provided with mounting means (8) that can be mounted to the towing hook, a platform (1) for carrying the freight, two guiding rods (2a,2b), mounted to the platform (1) and slidable connected to the immovable part (7), a wire shaft (3), connected to the platform (1) and mounted parallel to the guiding rods (2a,2b) and drive means, mounted to the immovable part (7), arranged for cooperating with the wire shaft (3), for adjusting a height of the platform (1), **characterised in that** the drive means are provided with an electric motor (10), with an electric circuit (16) connected to the electric motor (10) and with protection means (17,18,19,20,23), arranged for automatically steering the platform (1) upwards as soon as an ignition lock of the motor vehicle is switched on.

2. Freight rack according to claim 1, **characterised in that** the protection means (17,18,19,20,23) are also arranged for automatically switching off the electric motor (10) as soon as an electric current towards the electric motor (10) exceeds a previously determined current.

3. Freight rack according to claim 1 or 2, **characterised in that** the protection means (17,18,19,20,23) are also arranged for switching off the electric motor (10) as soon as the motor vehicle starts moving.

## Patentansprüche

1. Lasttransportgestell, eingerichtet für die Befestigung auf eine Anhängerkupplung eines Kraftfahrzeugs, welches Lasttransportgestell einen festen Teil (7), versehen mit Befestigungsmitteln (8), die an der Anhängerkupplung befestigt werden können, eine Ladefläche (1) für das Tragen der Last, zwei mit der Ladefläche (1) verbundene, verschiebbar an dem festen Teil (7) befestigte Führungsstangen (2a,2b), eine parallel zu den Führungsstangen verlaufende, mit der Ladefläche (1) verbundene Gewindestange (3) und mit dem festen Teil (7) verbundene Antriebsmittel, eingerichtet um mit der Gewindestange (3) für die Höheneinstellung der Ladefläche (1) zusammenzuarbeiten, umfasst, **dadurch gekennzeichnet, dass** die Antriebsmittel mit einem Elektromotor (10) versehen sind, mittels eines elektrischen Schaltkreises (16) mit dem Elektromotor (10) und mit Sicherungsmitteln (27,18,19,20,23) verbunden, eingerichtet für die automatische Steuerung der Ladefläche (1) nach oben, sobald ein Zündschloss des Kraftfahrzeugs eingeschaltet wird.

2. Lasttransportgestell gemäß Anspruch 1, **dadurch gekennzeichnet, dass** die Sicherungsmittel (17,18,19,20,23) ebenfalls für das automatische Ausschalten des Elektromotors (10) eingerichtet sind, sobald eine Stromabnahme des Elektromotors (10) einen zuvor bestimmten maximalen Strom überschreitet.

3. Lasttransportgestell gemäß Anspruch 1 oder 2, **dadurch gekennzeichnet, dass** die Sicherungsmittel (17,18,19,20,23) ebenfalls für das Ausschalten des Elektromotors (10) eingerichtet sind, sobald sich das Kraftfahrzeug in Bewegung setzt.

## Revendications

1. Dispositif de transport de charge, agencé pour être monté sur le dessus d'un crochet de remorquage d'un véhicule moteur, comprenant une partie immobile (7) munie de moyens de montage (8) qui peuvent être montés sur le crochet de remorquage, une plate-forme (1) pour porter la charge, deux tiges de guidage (2a,2b), montées sur la plate-forme (1) et reliées d'une manière coulissante à la partie immobile (7), une tige métallique (3) reliée à la plate-forme (1) et installée parallèlement aux tiges de guidage (2a,2b) et des moyens d'entraînement, montés sur la partie immobile (7), agencés pour coopérer avec la tige métallique (3) pour ajuster une hauteur de la plate-forme (1), **caractérisé en ce que** les moyens d'entraînement sont munis d'un moteur électrique (10), avec un circuit électrique (16) relié au moteur électrique (10) et avec des moyens de protection (17,18,19,20,23), agencés pour diriger automatiquement la plate-forme (1) vers le haut dès qu'une serrure de commutateur d'allumage du véhicule moteur est mise en service.

2. Dispositif de transport de charge selon la revendication 1, **caractérisé en ce que** les moyens de protection (17,18,19,20,23) sont également agencés pour mettre hors service automatiquement le moteur électrique (10) dès qu'un courant électrique vers le moteur électrique (10) dépasse un courant déterminé préalablement.

3. Dispositif de transport de charge selon la revendication 1 ou 2, **caractérisé en ce que** les moyens de protection (17,18,19,20,23) sont également agencés pour mettre hors service le moteur électrique (10) dès que le véhicule moteur commence à se déplacer.
